# EUROPÄISCHE PATENTSCHRIFT

(11) **EP 3 095 161 B1**
(45) Veröffentlichungstag und Bekanntmachung des Hinweises auf die Patenterteilung: **06.06.2018**
(21) Anmeldenummer: 14823909.8
(22) Anmeldetag: 19.12.2014
(51) Int. Cl.: H01R 13/53, H02G 15/06, H01R 13/52

(54) **HOCHSPANNUNGSKABELSTECKER**
HIGH-VOLTAGE CABLE PLUG
CONNECTEUR MÂLE DE CÂBLE À HAUTE TENSION

(30) Priorität: 15.01.2014 DE 102014000694
(43) Veröffentlichungstag der Anmeldung: 23.11.2016
(73) Patentinhaber: Pfisterer Kontaktsysteme GmbH, 73650 Winterbach (DE)
(72) Erfinder: KUHLEFELT, Jan, Henrik, Wilhelm, 100027 Beijing (CN)
(74) Vertreter: Bartels und Partner, Patentanwälte
(86) Internationale Anmeldenummer: PCT/EP2014/003444
(87) Internationale Veröffentlichungsnummer: WO 2015/106791

(56) Entgegenhaltungen:
- EP-A1- 0 429 734
- WO-A1-92/12554
- DE-A1- 4 239 648
- DE-A1-102004 054 639
- DE-C1- 4 139 100
- FR-A1- 2 221 837

## Beschreibung

Die Erfindung betrifft einen Hochspannungskabelstecker zur Montage an einem Ende eines Hochspannungskabels, insbesondere eines Energieversorgungs-Hochspannungskabels mit einer Betriebsspannung von mehr als 72,5 kV, mit den Merkmalen im Oberbegriff von Anspruch 1.

Derartige Hochspannungskabelstecker sind beispielsweise aus der DE 10 2004 054 639 A1 bekannt. Der Hochspannungskabelstecker weist ein beispielsweise aus einem weichelastischen Silikon hergestelltes Isolierteil auf, das auf seiner Außenfläche mindestens abschnittsweise kegelförmig ist und beim Herstellen der Steckverbindung in elektrisch dichte Anlage an ein beispielsweise durch Gießformen hergestelltes Buchsenelement bringbar ist, insbesondere an einen kegelförmigen Abschnitt des Buchsenelements.

Im Hinblick auf das Einsatzgebiet in der Hochspannungstechnik und zugehörigen Energieversorgungskabeln weisen derartige Hochspannungskabelstecker Außendurchmesser von mehr als 10 cm oder sogar mehr als 20 cm auf und eine Masse von mehreren kg. Nach dem Anbringen des Hochspannungskabelsteckers an dem Energieversorgungskabel muss beim Zusammenstecken mit dem Buchsenelement und beim späteren Trennen vom Buchsenelement, beispielsweise im Zusammenhang mit Wartungsarbeiten, auf die axiale Flucht von Hochspannungskabelstecker und Buchsenelement, beispielsweise einem Geräteanschlussteil, geachtet werden. Ein Versatz der Achsen oder eine Neigung der Achsen zueinander sind dabei zu vermeiden, um ein Anstoßen des dem Buchsenelement zugewandten metallischen Endes des Hochspannungskabelsteckers an dem Buchsenelement, insbesondere an dem konischen Abschnitt des Buchsenelements, zuverlässig zu verhindern, weil durch eine dabei möglicherweise auftretende Beschädigung die Betriebssicherheit der Steckverbindung herabgesetzt werden kann.

Um ein ordnungsgemäßes Zusammenstecken und Lösen zu gewährleisten, werden Hilfsmittel eingesetzt, beispielsweise Flaschenzüge, mittels denen ein axial ausgerichtetes Zusammenstecken sichergestellt werden kann. Allerdings findet das Zusammenstecken teilweise in Einbaubedingungen mit beengten Platzverhältnissen statt, beispielsweise in engen Kabelschächten oder Gebäudedurchbrüchen, was ein axial ausgerichtetes Zusammenstecken erschwert. Hinzu kommt, dass die minimal möglichen und erlaubten Biegeradien der Hochspannungskabel mit zunehmendem Kabeldurchmesser entsprechend zunehmen, so dass selbst mit Seilzügen nicht unter allen Bedingungen eine perfekt achsensymmetrische Ausrichtung des Kabelsteckers mit dem daran angebrachten Hochspannungskabel einerseits und dem Buchsenelement andererseits gewährleistet werden kann. Der zulässige minimale Biegeradius eines Hochspannungskabels entspricht üblicherweise dem 20fachen des Kabeldurchmessers, wird er unterschritten, kann die Funktionssicherheit des Kabels beeinträchtigt werden.

Die DE 41 39 100 C1 beschreibt einen Hochspannungskabelstecker zur Montage an einem Ende eines Hochspannungskabels, wobei der Hochspannungskabelstecker beim Herstellen der Steckverbindung mittels eines Kontaktelements in elektrisch dichte Anlage an ein dem Hochspannungskabelstecker zugeordnetes Buchsenelement bringbar ist, wobei das Kontaktelement des Hochspannungskabelsteckers nahe seinem dem Buchsenelement zugewandten Ende ein ringförmiges Schutzelement aufweist, das über das dem Buchsenelement zugewandte Ende des Hochspannungskabelsteckers in radialer Richtung, bezogen auf seine Längsachse, hinaus ragt.

Der Hochspannungskabelstecker weist einen hohlzylindrischen Kontaktträger aus elektrisch gut leitendem Material auf, der auf einen Bolzen konzentrisch aufgesetzt und mit diesem fest verbunden ist. Der Bolzen hat hierzu einen kegelstumpfförmigen Zentrierabschnitt und einen mit einem Außengewinde versehenen Endabschnitt.

Weitere Hochspannungskabelstecker gehen aus der EP 0 429 734 A1 und der DE 42 39 648 A1 hervor.

Ausgehend von diesem Stand der Technik liegt der Erfindung die Aufgabe zugrunde, einen Hochspannungskabelstecker für ein Energieversorgungs-Hochspannungskabel bereitzustellen, der unter Gewährleistung einer hohen Kontakt- und Betriebssicherheit mit geringem Aufwand steckbar und lösbar ist, insbesondere durch den die Gefahr einer Beschädigung beim Zusammenstecken und beim Lösen mit dem zugehörigen Buchsenelement zuverlässig verhindert ist.

Diese Aufgabe ist durch den im Anspruch 1 bestimmten Hochspannungskabelstecker gelöst. Besondere Ausführungsarten der Erfindung sind in den Unteransprüchen bestimmt.

Gemäß dem Kennzeichnungsteil des Anspruchs 1 ist vorgesehen, dass der Hochspannungskabelstecker ein auf das Ende des Hochspannungskabels aufbringbares Isolierteil aufweist, das auf seiner Außenfläche mindestens abschnittsweise kegelförmig ist, dass das Schutzelement axial endseitig auf das Kontaktelement aufgesetzt ist und so weit in radialer Richtung hinaus ragt, dass beim Einstecken und beim Ausstecken des Hochspannungskabelsteckers in das Buchsenelement durch das Schutzelement eine Beschädigung des Hochspannungskabelsteckers oder des Buchsenelements verhindert ist und dass eine Fluchtlinie, die durch die radiale Außenseite des Schutzelements einerseits und das dem Buchsenelement zugewandte metallische Ende des Hochspannungskabelsteckers andererseits festgelegt ist, mit der Längsachse des Hochspannungskabelsteckers einen Winkel einschließt, der größer ist als der Kegelwinkel des Isolierteils des Hochspannungskabelsteckers. Das Schutzelement ist vorzugsweise aus einem elektrisch isolierenden und insbesondere nicht-metallischen Werkstoff hergestellt und weist vorzugsweise eine kantenfreie Außenoberfläche auf. Durch das Schutzelement ist verhindert, dass beim Zusammenstecken und beim Lösen von Hochspannungskabelstecker und Buchsenelement ein insbesondere scharfkantiger metallischer Bestandteil des Hochspannungskabelsteckers mit dem Buchsenelement, insbesondere mit der konisch ausgeformten Innenfläche des Buchsenelements, in Berührung kommt. Dadurch wird beispielsweise ein Verkratzen der Isolierstoffinnenfläche und/oder ein Ablagern leitfähiger Partikel in der elektrisch wirksamen Fuge zwischen Buchsenelement und Isolierteil des Hochspannungskabelsteckers zuverlässig verhindert. Die erfindungsgemäße Steckerlösung dient insbesondere dem Anschluss des Kabels an ein elektrisches Betriebsmittel, wie beispielsweise dem Anschluss an gasisolierte Schaltanlagen oder ölgefüllte Transformatoren.

Das Schutzelement ist vorzugsweise aus einem Werkstoff hergestellt, der auf dem Werkstoff des Buchsenelements gut gleitet, insbesondere in Bezug auf den Werkstoff des Buchsenelements einen geringen Gleitreibungskoeffizienten und auch einen geringen Haftreibungskoeffizienten aufweist. Vorzugsweise soll sich das Schutzelement wenig verformen und/oder es sollen keine Partikel von dem Schutzelement ablösbar sein. Der auf der Innenfläche des Buchsenelements, insbesondere der konischen Innenfläche, aufgebrachte Gleitfilm wird durch das Schutzelement auch bei einer Anlage des Schutzelements an der Innenfläche vorzugsweise möglichst wenig verdrängt werden. Wünschenswert ist eine Formbeständigkeit des Schutzelements bis zu einer Betriebstemperatur von mindestens 120 °C, bei der auch die Gleiteigenschaften des Schutzelements auf dem Buchsenwerkstoff erhalten bleiben sollen, beispielsweise für ein Lösen der Steckverbindung.

In einer Ausführungsart ist das Schutzelement aus einem thermoplastischen Kunststoff hergestellt. Vorteilhaft ist, dass derartige Kunststoffe nicht weichelastisch, sondern hartelastisch verformbar sind und dadurch gute Gleiteigenschaften auf dem Werkstoff des Buchsenelements aufweisen. Untersuchungen haben ergeben, dass insbesondere der Kunststoff Polyoxymethylen (POM) besonders geeignet ist, nicht nur hinsichtlich seiner thermischen Belastbarkeit und Formstabilität, sondern auch hinsichtlich des Wärmedehnungsverhaltens und insbesondere der Gleiteigenschaften und des Abriebverhaltens im Zusammenwirken mit dem Buchsenelement. Außerdem treten keine chemischen Wechselwirkungen mit dem auf der Buchseninnenfläche aufgetragenen pastösen Gleitmittel auf Silikonbasis auf.

In einer Ausführungsart ist das Schutzelement ringförmig und auf seiner Außenfläche mindestens abschnittsweise zylindrisch oder kegelförmig. Insbesondere der dem Buchsenelement zugewandte Abschnitt und damit der dem Isolierteil abgewandte Abschnitt des Schutzelements kann verrundet sein, während der dem Buchsenelement abgewandte und damit dem Isolierteil zugewandte Abschnitt des Schutzelements zylindrisch ausgebildet sein kann. Dadurch ist sowohl eine mechanische Beschädigung der Buchseninnenfläche als auch eine unerwünschte Verdrängung des Gleitmittels auf der Buchseninnenfläche verhindert.

In einer Ausführungsart weist der Hochspannungskabelstecker ein Kontaktelement auf, das im zusammengesteckten Zustand die elektrische Verbindung zwischen dem Leiter des Hochspannungskabels und einem Kontaktelement des Buchsenelements herstellt. Das Kontaktelement kann dabei einen Kontaktträger und mindestens ein Kontaktorgan aufweisen, beispielsweise ein Kontaktorgan, das einen Viellinienkontakt mit dem Kontaktelement des Buchsenelements herstellt. Das Kontaktelement kann entlang der Längsachse des Hochspannungskabelsteckers zwischen dem Isolierteil und einem dem Buchsenelement zugewandten Ende des Hochspannungskabelsteckers angeordnet sein oder zwischen dem Isolierteil und einem Ende des Leiters des Hochspannungskabels.

In einer Ausführungsart ist das Schutzelement ringförmig und weist auf seiner Innenfläche einen Absatz auf. Dadurch lässt sich das Schutzelement einfach und sicher endseitig auf das Kontaktelement aufstecken oder aufschieben. Der Absatz auf der Innenfläche kann auch für ein Rasten des Schutzelements auf dem Kontaktelement eingesetzt werden, wenn das Kontaktelement entsprechend ausgebildet ist, beispielsweise einen hinsichtlich der Form und Abmessungen an den Absatz auf der Innenfläche des Schutzelements angepassten Steg oder eine entsprechende Vertiefung aufweist.

In einer Ausführungsart ist das Schutzelement axial endseitig auf das Kontaktelement aufgesetzt, insbesondere auf das dem Isolierteil abgewandte Ende des Kontaktelements. Dadurch lässt sich das Schutzelement auf einfache Weise an dem Kontaktelement festlegen, gegebenenfalls auch in einem Zustand, in dem das Kontaktelement noch nicht mit dem Hochspannungskabel verbunden ist.

In einer Ausführungsart weist das Kontaktelement an oder nahe seinem dem Isolierteil abgewandten Ende auf der Außenseite eine umlaufende Nut auf, in welche das Schutzelement einsetzbar ist. Beispielsweise kann das Schutzelement unlösbar in die Nut des Kontaktelements einrastbar sein. Dadurch ist das Schutzelement unverlierbar an dem Hochspannungskabelstecker, insbesondere dem Kontaktelement, angebracht.

In einer Ausführungsart verjüngt sich ein Steg, der die Nut in Richtung auf das dem Isolierteil abgewandte Ende des Kontaktelements begrenzt, in Richtung auf das dem Isolierteil abgewandte Ende des Kontaktelements, und ist auf der Außenseite insbesondere kegelförmig oder verrundet. Dadurch ist das Aufsetzen des Schutzelements auf das Kontaktelement vereinfacht.

In einer Ausführungsart weist der Hochspannungskabelstecker einen Spannkonus auf, der mit seiner Innenseite dem Leiter des Hochspannungskabels zugewandt und mit dem Leiter elektrisch verbunden ist, und der mit seiner Außenseite dem Kontaktelement zugewandt und mit dem Kontaktelement elektrisch verbunden ist. Beispielsweise kann der Spannkonus auf den Leiter des Hochspannungskabels aufgebracht sein und/oder das Kontaktelement kann auf der Außenseite des Spannkonus aufgebracht sein. Der Spannkonus kann beispielsweise durch in Längsrichtung verlaufende, vorzugsweise nicht-durchgehende Schlitze federelastisch verformbar sein und mittels des Kontaktelements, insbesondere mittels eines hülsenförmigen Kontaktträgers des Kontaktelements, auf den Leiter des Hochspannungskabels aufpressbar sein.

In einer Ausführungsart ragt der Spannkonus in Richtung auf das dem Buchsenelement zugewandte und damit dem Isolierteil abgewandte Ende des Hochspannungskabels über das Kontaktelement hinaus. Das Schutzelement oder ein weiteres Schutzelement kann auch den Spannkonus abdecken, insbesondere das dem Buchsenelement zugewandte Ende des Spannkonus abdecken. Ein solches Schutzelement kann beispielsweise auch in die Schlitze im Spannkonus einhängbar sein und dadurch einfach an dem Hochspannungskabelstecker festlegbar sein.

Schutzelemente können auch als partielle Beschichtung mit einem Isolierlack ausgeführt werden, die alle potentiellen Berührflächen von Kontaktring und Spannkonus mit dem Buchsenelement ganz oder teilweise überdeckt, aber weder die Innenseite vom Spannkonus, noch die möglichen Fügestellen beim Zusammenbau von Spannkonus und Kontaktring, noch das Kontaktorgan umfassen.

In der beanspruchten Erfindung schließt eine gedachte Fluchtlinie, die einerseits durch die radiale Außenseite des Schutzelements und andererseits durch das dem Buchsenelement zugewandte metallische Ende des Hochspannungskabelsteckers festgelegt ist, mit der Längsachse des Hochspannungskabelsteckers einen Winkel ein, der größer ist als der Kegelwinkel des Isolierteils des Hochspannungskabelsteckers. Das dem Buchsenelement zugewandte metallische Ende des Hochspannungskabelsteckers kann beispielsweise durch das dem Buchsenelement zugewandte Ende des über das Kontaktelement hinausragenden Spannkonus gebildet sein. In der Praxis hat sich herausgestellt, dass bei einer solchen Winkelanordnung die Gefahr von Beschädigungen der kegelförmigen Innenfläche des Buchsenelements praktisch eliminiert sind.

In einer Ausführungsart weist der Hochspannungskabelstecker eine Betriebsspannung von mehr als 72,5 kV auf, insbesondere mindestens oder sogar mehr als 170 kV. Auch bei derartigen großvolumigen Hochspannungskabelsteckern ist durch das erfindungsgemäße Schutzelement eine Beschädigung des Hochspannungskabelsteckers und insbesondere des Buchsenelements beim Zusammenstecken und beim Lösen der Verbindung zuverlässig verhindert.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine Seitenansicht eines ersten Ausführungsbeispiels eines erfindungsgemäßen Hochspannungskabelsteckers;
- Fig. 2: zeigt eine Seitenansicht eines zweiten Ausführungsbeispiels, bei dem das Kontaktelement weiter auf den Spannkonus aufgeschoben ist;
- Fig. 3: zeigt eine Seitenansicht des Kontaktelements;
- Fig. 4: zeigt einen Längsschnitt durch das Kontaktelement;
- Fig. 5: zeigt eine perspektivische Ansicht auf das Kontaktelement;
- Fig. 6: zeigt eine Rückansicht auf das Schutzelement; und
- Fig. 7: zeigt einen Schnitt durch das Schutzelement.

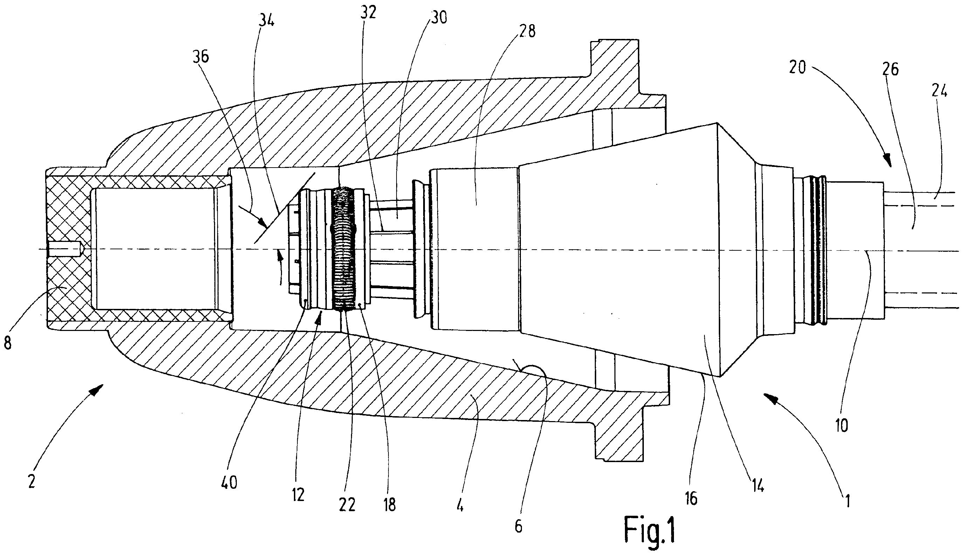

Die Fig. 1 zeigt eine Seitenansicht auf einen nicht vollständig dargestellten Hochspannungskabelstecker 1, der teilweise, aber noch nicht vollständig in ein im Querschnitt dargestelltes Buchsenelement 2 eingesteckt ist. Seitens des Hochspannungskabelsteckers 1 ist insbesondere die Flanschglocke nicht dargestellt, mittels welcher der Hochspannungskabelstecker 1 lösbar an dem Buchsenelement 2 festlegbar ist. Das Buchsenelement 2 weist einen elektrisch isolierenden und beispielsweise aus einem Gießharz hergestellten Buchsenkörper 4 auf, der abschnittsweise einen Innenkonus 6 ausbildet. In den Buchsenkörper 4 ist ein metallisches Kontaktelement 8 eingegossen, das eine hohlzylindrische Aufnahme für das Einsetzen des Kontaktelements 12 des Hochspannungskabelsteckers 1 ausbildet. Sowohl der Hochspannungskabelstecker 1 als auch das Buchsenelement 2 sind im Wesentlichen symmetrisch zur Längsachse 10 oder zu einer durch die Längsachse 10 hindurch tretenden Symmetrieebene.

Der Hochspannungskabelstecker 1 weist ein auf das Ende des Hochspannungskabels 20 aufbringbares Isolierteil 14 auf, das auf seiner Außenfläche abschnittsweise einen Außenkonus 16 aufweist, der beim vollständigen Einstecken des Hochspannungskabelsteckers 1 in das Buchsenelement 2 in elektrisch dichte Anlage an den Innenkonus 6 des Buchsenelements 2 bringbar ist. Es sind auch Ausführungen möglich, in welchen das Isolierteil 14 des Hochspannungskabelsteckers 1 einen Innenkonus bildet und das Buchsenelement 2 den zugehörigen Außenkonus.

Der Hochspannungskabelstecker 1 weist ein Kontaktelement 12 auf, welches wiederum einen Kontaktträger 18 und ein Kontaktorgan 22 aufweist, das im Ausführungsbeispiel ringförmig ist und in Umfangsrichtung eine Vielzahl von punkt- oder linienförmigen Kontaktstellen für die Anlage an dem Kontaktelement 8 des Buchsenelements 2 aufweist.

Bei der Montage des Hochspannungskabelsteckers 1 auf das Hochspannungskabel 20 wird das Isolierteil 14 auf die Leiterisolation 24 des Hochspannungskabels 20 so weit aufgeschoben, bis auf einem dem Buchsenelement 2 zugewandten Ende des Isolierteils 14 das Hochspannungskabel 20 mit einem Teil der Leiterisolation 24 und einem daran in Richtung auf das Buchsenelement 2 anschließenden und von der Leiterisolation 24 befreiten Ende des Leiters 26 herausragt. Anschließend wird ein Druckstück 28 auf die aus dem Isolierteil 14 herausragende Leiterisolation 24 aufgeschoben. In Richtung auf das Buchsenelement 2 ragt aus dem Druckstück 28 dann noch der Leiter 26 heraus, auf den ein Spannkonus 30 bis zur Anlage an dem Druckstück 28 aufgeschoben wird.

Der Spannkonus 30 weist vorzugsweise mehrere, sich in Längsrichtung erstreckende, aber nicht durchgehende Längsschlitze 32 auf, durch welche der Spannkonus 30 mit seiner im Wesentlichen zylindrischen Innenfläche in elektrisch kontaktgebende Anlage an den Leiter 26 bringbar ist. Auf der Außenseite bildet der Spannkonus 30 eine Kegelmantelfläche, auf welcher das hülsenförmige Kontaktelement 12 aufschiebbar ist, das auf seiner Innenseite einen gegebenenfalls auch mehrstufigen Innenkonus aufweist und vorzugsweise an seinem dem Druckstück 28 abgewandten Ende einen zylindrischen Abschnitt aufweist. Durch das Aufschieben des Kontaktelements 12 wird der Spannkonus 30 auf den Leiter 26 aufgepresst. Wie weit das Kontaktelement 12 in Richtung der Längsachse 10 auf den Spannkonus 30 aufgeschoben werden kann, hängt vom Querschnitt des Leiters 26 ab.

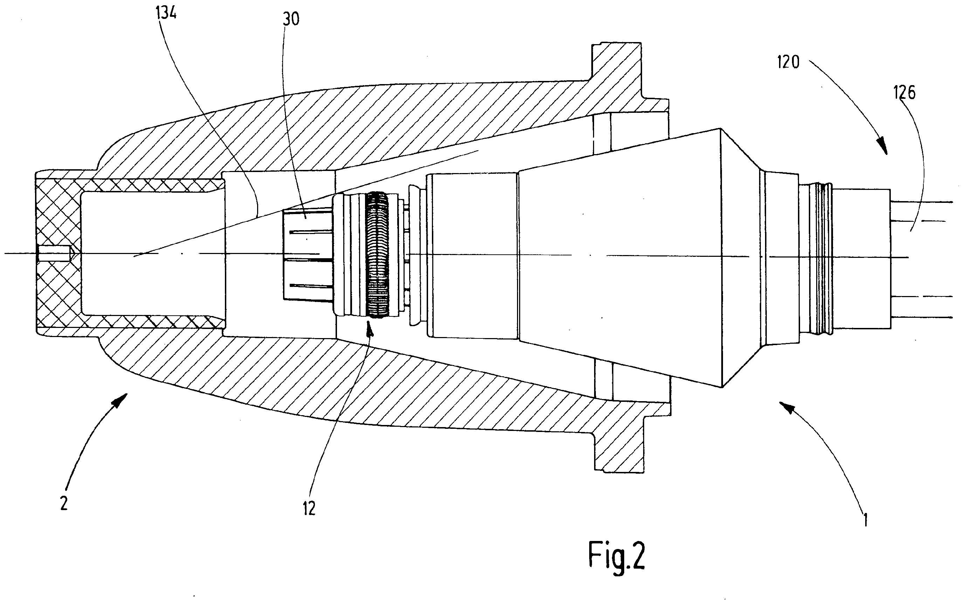

Der Hochspannungskabelstecker 1 ist vorzugsweise nicht nur für eine bestimmte Querschnittsfläche des Leiters 26 einsetzbar, sondern für einen gewissen Bereich der Querschnittsfläche und damit für unterschiedliche Querschnittsflächen des Leiters 26, weshalb die axiale Position des Kontaktelements 12 auf dem Spannkonus 30 unterschiedlich sein kann. So zeigt das Ausführungsbeispiel der Fig. 1 eine Position des Kontaktelements 12 nahe dem Ende des Hochspannungskabelsteckers 1 bzw. dessen Spannkonus 30. In dem in der Fig. 2 dargestellten Ausführungsbeispiel weist das Hochspannungskabel 120 einen Leiter 126 mit geringerer Querschnittsfläche auf, so dass das Kontaktelement 12 weiter auf den Spannkonus 30 aufgeschoben werden kann oder sogar muss, und damit von dem auf das Buchsenelement 2 zugewandte Ende des Spannkonus 30 weiter entfernt angeordnet ist.

Um beim Einstecken des Hochspannungskabelsteckers 1 in das Buchsenelement 2 auch bei großen Durchmessern des Hochspannungskabels 20 und den damit einhergehenden relativ großen Biegeradien und der erschwerten Handhabbarkeit ein Anstoßen des Hochspannungskabelsteckers 1 an dem Buchsenelement 2, insbesondere an dessen Innenkonus 6, zuverlässig zu verhindern, weist der Hochspannungskabelstecker 1 nahe seinem dem Buchsenelement 2 zugewandten Ende ein Schutzelement 40 auf, das über das dem Buchsenelement 2 zugewandte Ende des Hochspannungskabelsteckers 1 in radialer Richtung, bezogen auf die Längsachse 10, ausreichend weit hinausragt.

Im dargestellten Ausführungsbeispiel ist das Schutzelement 40 ringförmig und axial endseitig auf das Kontaktelement 12 aufgesetzt. Besonders zuverlässig kann eine Beschädigung des Buchsenelements 2 und/oder des Hochspannungskabelsteckers 1 verhindert werden, wenn die Fluchtlinie 34, 134, die ausgehend von einem dem Buchsenelement 2 zugewandten metallischen Ende des Hochspannungskabelsteckers 1, im dargestellten Ausführungsbeispiel ausgehend von der radialen Außenkante des Spannkonus 30 an seinem dem Buchsenelement 2 zugewandten Ende, tangential an die radiale Außenseite des Schutzelements 40 geführt ist, mit der Längsachse 10 einen Winkel 36 einschließt, der größer ist als der Winkel, den der Außenkonus 16 mit der Längsachse 10 einschließt.

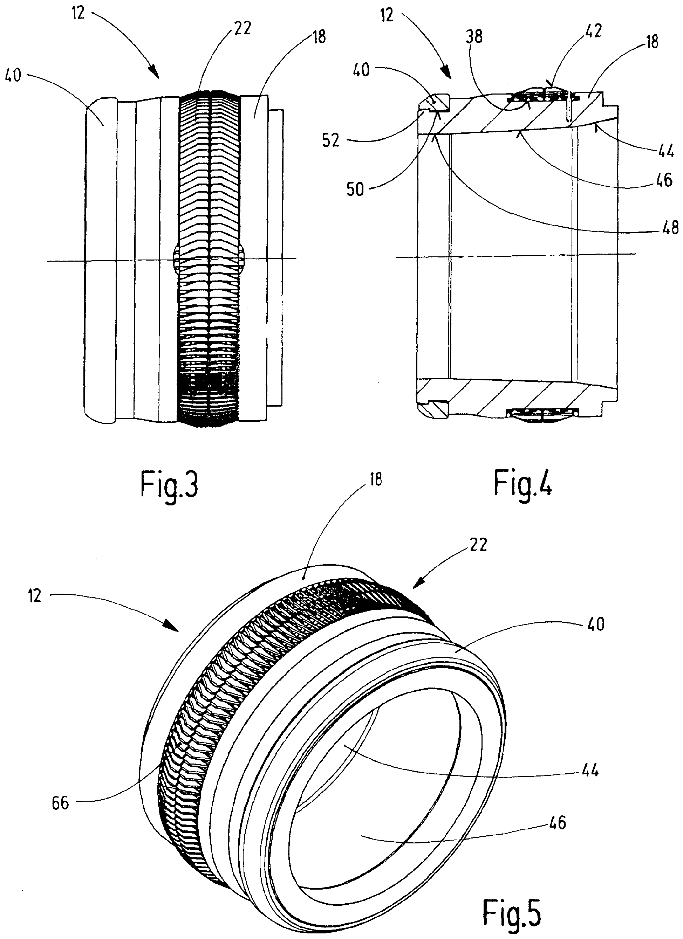

Die Fig. 3 zeigt eine Seitenansicht des Kontaktelements 12, die Fig. 4 zeigt einen Längsschnitt durch das Kontaktelement 12, und die Fig. 5 zeigt eine perspektivische Ansicht auf das Kontaktelement 12.

Das Kontaktorgan 22 ist auf der Außenseite des Kontaktträgers 18 in eine dort eingebrachte und ringförmig verlaufende Nut 38 eingesetzt und steht mit seinem durch eine Vielzahl von sich im Wesentlichen axial erstreckenden und in Umfangsrichtung hintereinander angeordneten Kontaktlamellen 66 gebildeten Kontaktkanten 42 radial über die sich an die Nut 38 anschließende Außenfläche des Kontaktträgers 18 über.

Auf seiner Innenseite weist der Kontaktträger 18 an seinem dem Druckstück 28 zugewandten Ende zunächst einen ersten Innenkonus 44 auf, der das Aufsetzen des Kontaktträgers 18 bzw. des Kontaktelements 12 auf den Spannkonus 30 vereinfacht. Außerdem weist der Kontaktträger 18 auf der Innenseite einen zweiten Innenkonus 46 auf, dessen Kegelwinkel an den Außenkegel des Spannkonus 30 angepasst ist und insbesondere im Wesentlichen mit diesem übereinstimmt. Im Bereich des zweiten Innenkonus 46 ist auf der Außenseite das Kontaktorgan 22 an den Kontaktträger 18 angeordnet.

In Richtung auf das dem Buchsenelement 2 zugewandte Ende weist der Kontaktträger 18 auf der Innenseite einen im Wesentlichen zylindrischen Abschnitt 48 auf, in dessen Bereich außenseitig an dem Kontaktträger 18 das Schutzelement 40 angeordnet ist. Der Kontaktträger 18 weist hierzu auf der Außenseite eine umlaufende Nut 50 auf, in welche das Schutzelement 40 eingreift oder einsetzbar ist. In Richtung auf das axiale Ende des Kontaktträgers 18 ist die Nut 50 durch einen flanschförmigen Steg 52 begrenzt, der sich in Richtung auf das dem Buchsenelement 2 zugewandte Ende des Kontaktelements 12 bzw. des Kontaktträgers 18 verjüngt, im Ausführungsbeispiel kegelförmig verjüngt.

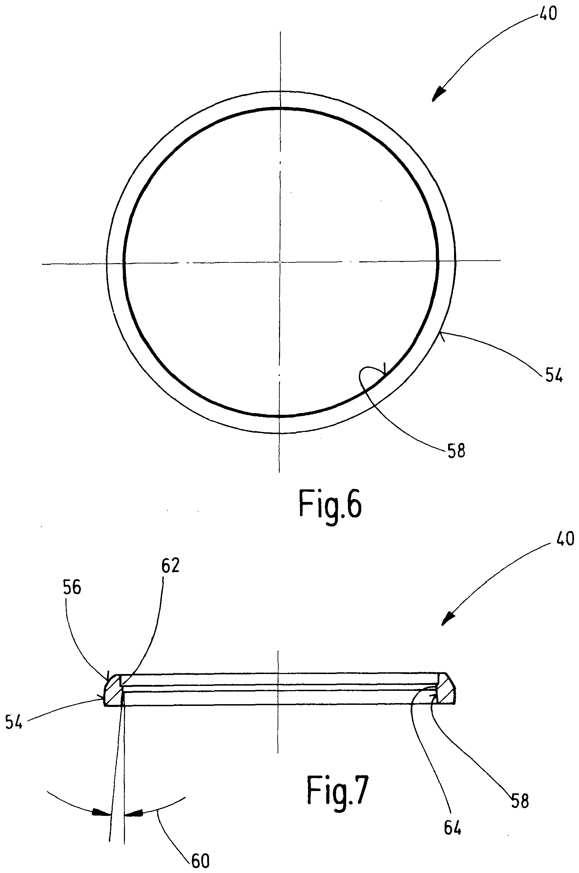

Die Fig. 6 zeigt eine Rückansicht auf das Schutzelement 40 und die Fig. 7 einen Schnitt durch das Schutzelement 40. Im Ausführungsbeispiel ist das Schutzelement 40 aus einem thermoplastischen Kunststoff hergestellt, vorzugsweise aus Polyoxymethylen (POM). Das ringförmige Schutzelement 40 weist auf seiner Außenfläche einen zylindrischen Abschnitt 54 und daran anschließend einen verrundeten Abschnitt 56 auf. Im Bereich des auf der Außenseite zylindrischen Abschnitts 54 weist das Schutzelement auf der Innenseite eine Kegelfläche 58 auf, wobei der Kegelwinkel 60 zwischen 3 und 12° liegt, insbesondere zwischen 5 und 8°, und im Ausführungsbeispiel etwa 6,5° beträgt. Der Kegelwinkel 60 kann dabei im Wesentlichen übereinstimmen mit dem von dem Steg 52 des Kontaktträgers 18 endseitig gebildeten Außenkonus.

Auf seiner Innenfläche weist das Schutzelement 40 einen Absatz 62 auf, vorzugsweise mit rechtwinkliger Kontur, mittels welchem das Schutzelement 40 verrastend in der Nut 50 des Kontaktträgers 18 festlegbar ist. Hierzu ist es vorteilhaft, wenn sich auf der Innenseite an die Kegelfläche 58 ein im Wesentlichen zylindrischer Abschnitt 64 anschließt, welcher an den Absatz 62 angrenzt.

Im dargestellten Ausführungsbeispiel beträgt der Außendurchmesser des Schutzelements 40 etwa 100 mm und der Hochspannungskabelstecker 1 ist für Betriebsspannungen von mehr als 170 kV vorgesehen.

## Patentansprüche

1. Hochspannungskabelstecker (1) zur Montage an einem Ende eines Hochspannungskabels (20), wobei der Hochspannungskabelstecker (1) beim Herstellen der Steckverbindung mittels eines Kontaktelements (12) in elektrisch dichte Anlage an ein dem Hochspannungskabelstecker (1) zugeordnetes Buchsenelement (2) bringbar ist wobei das Buchsenelement (2) einen Buchsenkörper (4) und ein darin eingegossenes metallisches Kontaktelement (8) umfasst, welches eine hohlzylindrische Aufnahme für das Einsetzen des Kontaktelements (12) ausbildet, wobei das Kontaktelement (12) des Hochspannungskabelsteckers (1) an oder nahe seinem dem Buchsenelement (2) zugewandten Ende ein ringförmiges Schutzelement (40) aufweist, das über das dem Buchsenelement (2) zugewandte Ende des Hochspannungskabelsteckers (1) in radialer Richtung, bezogen auf seine Längsachse (10), hinaus ragt, **dadurch gekennzeichnet, dass** der Hochspannungskabelstecker (1) ein auf das Ende des Hochspannungskabels (20) aufbringbares Isolierteil (14) aufweist, das auf seiner Außenfläche mindestens abschnittsweise kegelförmig ist, dass das Schutzelement (40) axial endseitig auf das Kontaktelement (12) aufgesetzt ist und so weit in radialer Richtung hinaus ragt, dass beim Einstecken und beim Ausstecken des Hochspannungskabelsteckers (1) in das Buchsenelement (2) durch das Schutzelement (40) eine Beschädigung des Hochspannungskabelsteckers (1) oder des Buchsenelements (2) verhindert ist und dass eine Fluchtlinie (34,134), die durch die radiale Außenseite des Schutzelements (40) einerseits und das dem Buchsenelement (2) zugewandte metallische Ende des Hochspannungskabelsteckers (1) andererseits festgelegt ist, mit der Längsachse (10) des Hochspannungskabelsteckers (1) einen Winkel (36) einschließt, der größer ist als der Kegelwinkel des Isolierteils (14) des Hochspannungskabelsteckers (1).

2. Hochspannungskabelstecker (1) nach Anspruch 1, **dadurch gekennzeichnet, dass** das Schutzelement (40) ringförmig ist und auf seiner Außenfläche mindestens abschnittsweise zylindrisch oder kegelförmig ist.

3. Hochspannungskabelstecker (1) nach Anspruch 1 oder 2, **dadurch gekennzeichnet, dass** das Schutzelement (40) ringförmig ist und auf seiner Innenfläche einen Absatz (62) aufweist.

4. Hochspannungskabelstecker (1) nach einem der vorgenannten Ansprüche, **dadurch gekennzeichnet, dass** der Hochspannungskabelstecker (1) ein Kontaktelement (12) aufweist, über das im zusammengesteckten Zustand des Hochspannungskabelsteckers (1) in das Buchsenelement (2) der Leiter (26) des Hochspannungskabels (20) mit einem Kontaktelement (8) des Buchsenelements (2) elektrisch verbindbar ist.

5. Hochspannungskabelstecker (1) nach einem der vorgenannten Ansprüche, **dadurch gekennzeichnet, dass** das Schutzelement (40) aus einem thermoplastischen Kunststoff hergestellt ist.

6. Hochspannungskabelstecker (1) nach einem der vorgenannten Ansprüche, **dadurch gekennzeichnet, dass** das Kontaktelement (12) an oder nahe seinem dem Buchsenelement (2) zugewandten Ende auf der Außenseite eine umlaufende Nut (50) aufweist, in welche das Schutzelement (40) einsetzbar ist.

7. Hochspannungskabelstecker (1) nach einem der vorgenannten Ansprüche, **dadurch gekennzeichnet, dass** ein Steg (52), der die Nut (50) in Richtung auf das dem Buchsenelement (2) zugewandte Ende des Kontaktelements (12) begrenzt, sich in Richtung auf das dem Buchsenelement (2) zugewandte Ende des Kontaktelements (12) verjüngt, insbesondere auf der Außenseite kegelförmig oder verrundet ist.

8. Hochspannungskabelstecker (1) nach einem der vorgenannten Ansprüche, **dadurch gekennzeichnet, dass** der Hochspannungskabelstecker (1) einen Spannkonus (30) aufweist, der mit seiner Innenseite dem Leiter (26) des Hochspannungskabels (20) zugewandt und mit dem Leiter (26) elektrisch verbunden ist, insbesondere auf den Leiter (26) des Hochspannungskabels (20) aufgebracht ist, und der mit seiner Außenseite dem Kontaktelement (12) zugewandt und mit dem Kontaktelement (12) elektrisch verbunden ist, insbesondere dass das Kontaktelement (12) auf der Außenseite des Spannkonus (30) aufgebracht ist.

9. Hochspannungskabelstecker (1) nach einem der vorgenannten Ansprüche, **dadurch gekennzeichnet, dass** der Spannkonus (30) in Richtung auf das dem Buchsenelement (2) zugewandte Ende des Hochspannungskabelsteckers (1) über das Kontaktelement (12) hinaus ragt.

10. Hochspannungskabelstecker (1) nach einem der vorgenannten Ansprüche, **dadurch gekennzeichnet, dass** der Hochspannungskabelstecker (1) mit einer Betriebsspannung von mehr als 72,5 kV beaufschlagbar, insbesondere mindestens oder sogar mehr als 170 kV.

## Claims

1. A high voltage cable connector (1) for mounting on one end of a high voltage cable (20), when establishing the plug-in connection the high voltage cable connector (1) being able to be brought into electrically tight contact with a socket element (2) assigned to the high voltage cable connector (1) by means of a contact element (12), the socket element (2) comprising a socket element body (4) and a metallic contact element (8) cast therein, which socket element forms a hollow cylindrical receptacle for the insertion of the contact element (12), the contact element (12) of the high voltage cable connector (1) having an annular protective element (40) at or close to its end facing the socket element (2) and which protrudes beyond the end of the high voltage cable connector (1) facing the socket element (2) in the radial direction, in relation to its longitudinal axis (10), **characterised in that** the high voltage cable connector (1) has an insulating part that can be mounted on the end of the high voltage cable (20) and which is tapered, at least in sections, on its outer surface, that on the axial end the protective element (40) is mounted on the contact element (12) and protrudes so far in the radial direction that when the high voltage cable connector (1) is connected to and disconnected from the socket element (2), the protective element (40) prevents damage to the high voltage cable connector (1) or to the socket element (2), and that an alignment (34, 134), which is determined by the radial outside of the protective element (40) on the one hand and the metallic end of the high voltage cable connector (1) facing the socket element (2) on the other hand, encloses an angle (36) with the longitudinal axis (10) of the high voltage cable connector (1) which is larger than the taper angle of the insulating part (14) of the high voltage cable connector (1).

2. The high voltage cable connector (1) according to Claim 1, **characterised in that** the protective element (40) is annular and is cylindrical or tapered, at least in sections, on its outer surface.

3. The high voltage cable connector (1) according to Claim 1 or 2, **characterised in that** protective element (40) is annular and has a shoulder (62) on its inner surface.

4. The high voltage cable connector (1) according to any of the above-specified claims, **characterised in that** the high voltage cable connector (1) has a contact element (12) by means of which, in the connected state of the high voltage cable connector (1) into the socket element (2), the conductor (26) of the high voltage cable (20) can be electrically connected to a contact element (8) of the socket element (2).

5. The high voltage cable connector (1) according to any of the above-specified claims, **characterised in that** the protective element (40) is produced from a thermoplastic synthetic material.

6. The high voltage cable connector (1) according to any of the above-specified claims, **characterised in that** the contact element (12) has a circumferential groove (50) on or near its end facing the socket element (2) on the outside, into which the protective element (40) can be inserted.

7. The high voltage cable connector (1) according to any of the above-specified claims, **characterised in that** a ridge (52), which delimits the groove (50) in the direction of the end of the contact element (12) facing the socket element (2), tapers in the direction of the end of the contact element (12) facing the socket element (2) and is, in particular, tapered or rounded on the outside.

8. The high voltage cable connector (1) according to any of the above-specified claims, **characterised in that** the high voltage cable connector (1) has a clamping cone (30), the inside of which faces the conductor (26) of the high voltage cable (20) and is electrically connected to the conductor (26), in particular is mounted on the conductor (26) of the high voltage cable (20), and the outside of which faces the contact element (12) and is electrically connected to the contact element (12), in particular that the contact element (12) is mounted on the outside of the clamping cone (30).

9. The high voltage cable connector (1) according to any of the above-specified claims, **characterised in that** the clamping cone (30) protrudes beyond the contact element (12) in the direction of the end of the high voltage cable connector (1) facing the socket element (2).

10. The high voltage cable connector (1) according to any of the above-specified claims, **characterised in that** an operating voltage of more than 72.5 kV, in particular at least or even more than 170 kV, can be applied to the high voltage cable connector (1).

## Revendications

1. Connecteur (1) mâle de câble de haute tension à monter à une extrémité d'un câble (20) de haute tension, le connecteur (1) mâle de câble de haute tension pouvant, lors de la production de la connexion par enfichage, être mis, au moyen d'un élément (12) de contact, en application étroite électriquement sur un élément (2) de douille associé au connecteur (1) mâle de câble de haute tension, l'élément (2) de douille comprenant un corps (4) de douille et un élément (8) de contact métallique, qui y est coulé et qui constitue un logement cylindrique creux pour l'insertion de l'élément (12) de contact,
dans lequel l'élément (12) de contact du connecteur (1) mâle de câble de haute tension a, sur ou près de son extrémité, tournée vers l'élément (2) de douille, un élément (40) annulaire de protection, qui, rapporté à sa longueur (10) longitudinale, dépasse de l'extrémité, tournée vers l'élément (2) de douille, du connecteur (1) mâle de câble de haute tension dans une direction radiale, **caractérisé en ce que** le connecteur (1) mâle de câble de haute tension a une partie (14) isolante, qui peut être mise sur l'extrémité du câble (20) de haute tension et qui est de forme conique, au moins par tronçon, sur sa surface extérieure, **en ce que** l'élément (40) de protection est mis, axialement du côté de l'extrémité, sur l'élément (12) de contact et dépasse si loin dans la direction radiale que, lors de l'enfichage et du désenfichage du connecteur (1) mâle de câble de haute tension dans l'élément (2) de douille, un endommagement du connecteur (1) mâle de câble de haute tension ou de l'élément (2) de douille est empêché par l'élément (40) de protection, et **en ce qu'**une ligne (34, 134) d'alignement, qui est fixée par le côté extérieur radial de l'élément (40) de protection d'une part et par l'extrémité métallique, tournée vers l'élément (2) de douille, du connecteur (1) mâle de câble de haute tension d'autre part, fait, avec l'axe (10) longitudinal du connecteur (1) mâle de câble de haute tension, un angle (36), qui est plus grand que l'angle de cône de la partie (14) isolante du connecteur (1) mâle de câble de haute tension.

2. Connecteur (1) mâle de câble de haute tension suivant la revendication 1, **caractérisé en ce que** l'élément (40) de protection est annulaire et est, au moins par endroit, cylindrique ou conique sur sa surface extérieure.

3. Connecteur (1) mâle de câble de haute tension suivant la revendication 1 ou 2, **caractérisé en ce que** l'élément (40) de protection est annulaire et a un ressaut (62) sur sa surface intérieure.

4. Connecteur (1) mâle de câble de haute tension suivant l'une des revendications précédentes, **caractérisé en ce que** le connecteur (1) mâle de câble de haute tension a un élément (12) de contact par lequel, lorsque le connecteur (1) mâle de câble de haute tension est à l'état enfiché ensemble dans l'élément (2) de douille, le conducteur (26) du câble (20) de haute tension peut être relié électriquement à un élément (8) de contact de l'élément (2) de douille.

5. Connecteur (1) mâle de câble de haute tension suivant l'une des revendications précédentes, **caractérisé en ce que** l'élément (40) de protection est en une matière plastique thermoplastique.

6. Connecteur (1) mâle de câble de haute tension suivant l'une des revendications précédentes, **caractérisé en ce que** l'élément (12) de contact a, sur ou près de son extrémité, tournée vers l'élément (2) de douille, sur la face extérieure, une rainure (50), qui fait le tour et dans laquelle l'élément (40) de protection peut être inséré.

7. Connecteur (1) mâle de câble de haute tension suivant l'une des revendications précédentes, **caractérisé en ce qu'**une nervure (52), qui, dans la direction de l'extrémité, tournée vers l'élément (2) de douille, de l'élément (12) de contact, délimite la rainure (50), se rétrécit en direction de l'extrémité, tournée vers l'élément (2) de douille, de l'élément (12) de contact, en étant notamment de forme conique sur la face extérieure ou arrondie.

8. Connecteur (1) mâle de câble de haute tension suivant l'une des revendications précédentes, **caractérisé en ce que** le connecteur (1) mâle de câble de haute tension a un cône (30) de serrage, qui est tourné, par sa face intérieure, vers le conducteur (36) du câble (20) de haute tension et qui est relié électriquement au conducteur (26), en étant appliqué notamment au conducteur (26) du câble (20) de haute tension et qui est tourné, par sa face extérieure, vers l'élément (12) de contact et est relié électriquement à l'élément (12) de contact, notamment **en ce que** l'élément (12) de contact est appliqué à la face extérieure du cône (30) de serrage.

9. Connecteur (1) mâle de câble de haute tension suivant l'une des revendications précédentes, **caractérisé en ce que** le cône (30) de serrage dépasse de l'élément (12) de contact dans la direction vers l'extrémité, tournée vers l'élément (2) de douille, du connecteur (1) mâle de câble de haute tension.

10. Connecteur (1) mâle de câble de haute tension suivant l'une des revendications précédentes, **caractérisé en ce qu'**il peut être appliqué au connecteur (1) mâle de câble de haute tension une tension de fonctionnement de plus de 72,5 kV, notamment d'au moins ou même plus que 170 kV.
